# EUROPEAN PATENT SPECIFICATION

(11) **EP 2 631 458 B1**
(45) Date of publication and mention of the grant of the patent: **14.08.2019**
(21) Application number: 11834425.8
(22) Date of filing: 20.10.2011
(51) Int. Cl.: F02D 41/14, F02D 9/02, F02D 11/10, F02D 19/02, F02D 45/00, F02M 21/02, F02M 21/04, F02D 41/00, F02D 41/02, F02D 29/06

(54) **ENGINE CONTROL METHOD**
MOTORSTEUERUNGSVERFAHREN
PROCÉDÉ DE COMMANDE DE MOTEUR

(30) Priority: 22.10.2010 JP 2010237560
(43) Date of publication of application: 28.08.2013
(73) Proprietor: Yanmar Co., Ltd., Osaka-shi, Osaka 530-8311 (JP)
(72) Inventor: HAGIWARA, Ryoichi, Osaka-shi Osaka 530-8311 (JP); NAKAZONO, Toru, Osaka-shi Osaka 530-8311 (JP); OTSUBO, Hiroyuki, Osaka-shi Osaka 530-8311 (JP); HARA, Akihiro, Osaka-shi Osaka 530-8311 (JP)
(74) Representative: Boult Wade Tennant LLP
(86) International application number: PCT/JP2011/074147
(87) International publication number: WO 2012/053586

(56) References cited:
- JP-A- 2002 221 099
- JP-A- 2005 240 585
- JP-A- 2005 256 674
- JP-A- 2005 264 730
- JP-A- 2005 264 730
- JP-A- 2006 009 603
- JP-A- 2008 002 271
- JP-A- 2009 249 600
- JP-B2- 4 392 750
- US-A- 4 589 397
- US-A1- 2009 192 698

## Description

### Technical field

The current invention relates to an engine control method for controlling the engine, when a calorific value per unit volume of fuel changes.

### Background art

Fuel is usually constituted by a large number of components which are different in composition, and the each component has a different calorific value. Therefore, the calorific value of the fuel itself changes with the concentration of the each component. For example, in the case of fuel generated at a gasification furnace, the concentration of a component is greatly affected according to the kind of raw material of gas, and the operational status of the gasification furnace. Therefore, with the fuel generated at the gasification furnace, the calorific value of fuel per unit volume changes in time. As fuel generated at a gasification furnace, there are fuel gas acquired by carrying out pyrolysis of wood waste and so on, fuel gas discharged from a waste disposal plant, biofuel gas acquired from biotic excretion and so on, and natural flow fuel gas from reclaimed land and so on.

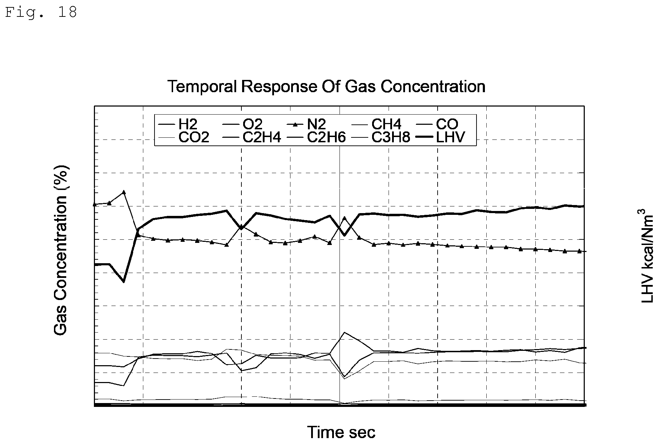

Fig. 18 is a view showing temporal responses of concentration of each component and lower calorific value (LHV) of the fuel itself, about fuel supplied from a gasification furnace. In Fig. 18, the concentration of each component is changing in time. As a result, the calorific value (the calorific value per unit volume) of the fuel itself is also changing in time.

The patent document 1 discloses a biomass gasification system which uses pyrolysis gas generated by carrying out the pyrolysis of biomass feedstock, as fuel gas. The pyrolysis gas generated from the biomass feedstock is also fuel where the concentration of the component changes in time.

Furthermore, patent document 2 relates to a method for automatically controlling a stationary gas engine, where an engine speed control deviation is computed from a set engine speed and an actual engine speed, and a set torque is determined as a correcting variable from the speed control deviation by means of a speed controller.

In general, when a calorific value falls, in each component which constitutes the fuel, increasing is concentration of a component which has a low calorific value or does not contribute to combustion. Therefore, an air content required to carry out perfect combustion of a fixed quantity of fuel decreases as a calorific value falls. That is, fall of the calorific value decreases a theoretical air-fuel ratio.

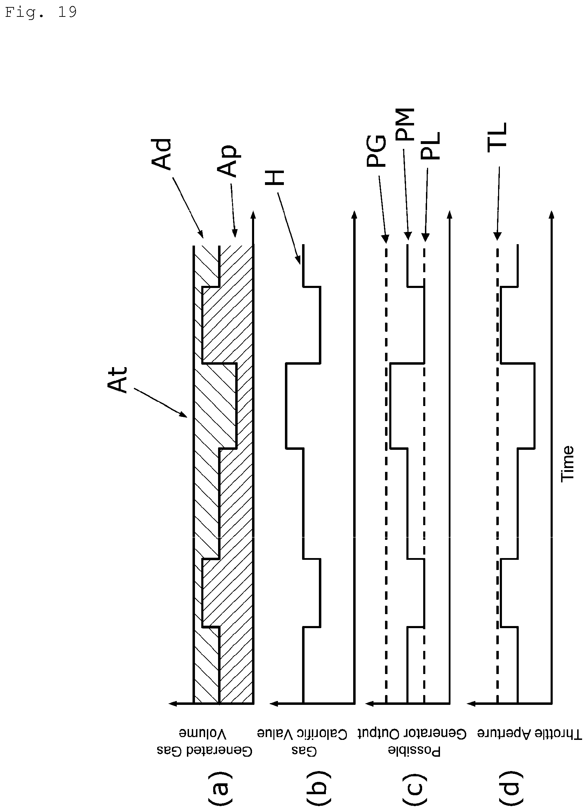

Fig. 19 is a view showing temporal responses of a generated gas volume (a), a gas calorific value (b), a possible generator output (c), and a throttle aperture (d). Fig. 19 (a) shows a temporal response of a generated gas volume At of fuel gas generated from a gasification furnace. The generated gas volume At is constant in general with time, because the generated gas volume At cannot be changed greatly on the composition of a gasification furnace. Here, the engine uses the fuel gas generated from the gasification furnace as fuel. The fuel gas which has not been used for combustion with the engine is discarded as it is.

Fig. 19 (b) shows a temporal response of a calorific value H of fuel gas. The calorific value H of fuel gas changes in time, because the component of fuel generated from a gasification furnace changes in time. Therefore, a theoretical air-fuel ratio changes in time.

By changing an air flow rate according to a calorific value (a theoretical air-fuel ratio), fuel gas from a gasification furnace can be burned to the utmost. In this case, a required air flow rate increases as a calorific value becomes high, and a required air flow rate decreases as a calorific value becomes low.

Fig. 19 (c) shows a temporal response of a possible generator output PM in case that fuel gas from a gasification furnace is used to the maximum. The engine is used as a source of a drive source of a generator, and the generator output of the generator is proportional to an engine output. As mentioned above, it is possible to use the fuel gas from the gasification furnace to the maximum, by changing the air flow rate according to the calorific value. Therefore, as shown in Fig. 19 (c), the possible generator output PM fundamentally changes in proportion to the calorific value. However, since there is a limit in a fuel flow rates and an air flow rates which can be supplied, the possible generator output PM is restricted by a maximum fuel flow rate and a maximum air flow rate. The maximum fuel flow rate is equal to the generated gas volume At. The maximum air flow rate is an air flow rate when the throttle aperture is maintained at the maximum, for example. Since the generated gas volume At is approximately a constant value in Fig. 19 (a), the possible generator output PM is restricted by a limit value TL of the throttle aperture. The throttle aperture limit value TL is shown in Fig. 19 (d). Moreover, the possible generator output PM is restricted also by a generator output upper limit value PG. The generator output upper limit value PG shows an output limit of the generator.

In order to obtain the possible generator output PM as an actual output, according to change of the calorific value, it is necessary to set the possible generator output PM as a target value of the generator output. For example, when the target value of the generator output is set more highly than the possible generator output PM, the actual value of the generator output cannot reach the target value by shortage of the fuel flow rate or shortage of the air flow rate. That is, output control falls into impossible status. As a case of loss of output control, even if the throttle aperture is maintained at the maximum, specifically, there is a case that the air flow rate may be insufficient, for example.

Conventionally, engine control is performed without detecting the temporal response of the calorific value (the theoretical air-fuel ratio). In this case, in order to prevent the occurrence of loss of output control, the target value of the generator output is maintained at an output limit value PL of a constant value. The output limit value PL is a value of the power generation electric power which can be output, when the throttle aperture is at the maximum, in the calorific value of the minimum value assumed. As long as the target value of the generator output is maintained at output limit value PL, even if the calorific value changes, the situation of loss of output control does not occur.

Fig. 19 (d) shows a temporal response of an actual value TR of a throttle aperture in case that a target value of a generator output is maintained at output limit value PL. In this case, the actual value TR of the throttle aperture is changed so that the actual value of the generator output may be maintained at the output limit value PL. In general, change of the actual value TR of the throttle aperture is in inverse proportion to change of the calorific value. As a result, in Fig. 19 (a), a use gas volume Ap is proportional to change of the actual value TR of the throttle aperture. The use gas volume Ap shows a gas volume used for power generation, and an abandonment gas volume Ad shows a gas volume thrown away vainly. The generated gas volume At is equal to a sum total of the use gas volume Ap and the abandonment gas volume Ad.

### Citation list

### Patent Literature

Patent documents 1
   Japanese unexamined patent publication 2009-249600
Patent document 2
   US2009192698 A1

### Summary of Invention

### Technical Problem

Conventionally, in order to prevent the occurrence of the loss of output control by change of the calorific value, the target value of the generator output is maintained at the constant value set according to the minimum value of the calorific value. That is, the target value of the generator output is set according to the minimum value of a possible generator output. Since the amount of use of fuel gas is set according to the case where the calorific value is low, the amount of use of fuel gas falls, when the calorific value is high. As a result, as shown in Fig. 19 (a), a ratio of the abandonment gas volume Ad to the generated gas volume At becomes comparatively large.

Therefore, the current invention provides an engine control method which can heighten an output as much as possible according to change of calorific value, while preventing the occurrence of loss of output control.

### Solution to Problem

The current invention provides an engine control method for controlling an engine which is supplied with fuel from a gasification furnace where a calorific value per unit volume of fuel changes, the engine control method comprising the steps of: detecting an actual value of oxygen concentration in exhaust gas; detecting an actual value of a fuel flow rate and an actual value of an air flow rate; calculating an actual value of a theoretical air-fuel ratio changing according to the calorific value, based on the actual value of the oxygen concentration, the actual value of the mixture gas flow rate, and the actual value of the fuel control valve aperture; controlling a first controlled variable determining the air-fuel ratio so that the actual value of the air-fuel ratio coincides with the actual value of the theoretical air-fuel ratio; wherein the first controlled variable is an aperture of a fuel control valve for controlling a flow rate of the fuel supplied to a mixer; setting a target value of an output of the engine to an output limit value; detecting an actual value of the output; and controlling a second controlled variable determining the air flow rate or a mixture gas flow rate so that the actual value of the output coincides with the target value of the output, wherein the second controlled variable is an aperture of a throttle valve, or the second controlled variable is air supply pressure; wherein the output limit value is a size of the output acquired when the air-fuel ratio is maintained at the theoretical air-fuel ratio and the second controlled variable is maintained at a predetermined second limit value.
(a) Preferably, in the step of setting the target value of the output, the output limit value corresponding to the actual value of the output and the actual value of the second controlled variable is specified, based on correlation among the output, the second controlled variable, and the output limit value, and the target value of the output is set to the output limit value.
(b) Preferably, in the step of setting the target value of the output, the target value of the output is set to the output limit value, by changing or maintaining the target value of the output so that the actual value of the second controlled variable is maintained at the second limit value.
(c) The engine control method comprises the steps of: setting an output upper limit value; and coinciding the target value of the output with the output upper limit value when the target value of the output is higher than the output upper limit value.
(d) The engine control method comprises the steps of: setting a fuel flow rate limit value; and coinciding the actual value of the fuel flow rate with the fuel flow rate limit value by decreasing the target value of the output, when the actual value of the fuel flow rate is higher than the fuel flow rate limit value.
(e) Preferably, a controlled variable for specifying the fuel flow rate is an aperture of a fuel control valve for controlling a flow rate of the fuel supplied to a mixer; and a throttle aperture, air supply pressure and air supply temperature, or air supply pressure.
(f) Preferably, a controlled variable for specifying the fuel flow rate is a pressure differential of fuel pressure between upper stream side and lower stream side of a fuel control valve for controlling a flow rate of the fuel supplied to a mixer; and a throttle aperture, air supply pressure and air supply temperature, or air supply pressure.

### Advantageous Effects of Invention

In the engine control method according to the current invention, the target value of the output changes according to change of the calorific value. Since the target value of the output is set so that the actual value of the second controlled variable is maintained at a predetermined limit value, the occurrence of loss of output control is prevented. Therefore, the engine control method according to the current invention can heighten the output as much as possible according to change of the calorific value, while preventing the occurrence of loss of output control.

### Brief Description of Drawings

Fig. 1 is a schematic view showing an engine, an engine control system, and a fuel source (Example 1).
Fig. 2 is a flow chart of output control (Example 1).
Fig. 3 is a view showing correlation of an output, a throttle aperture, and power generation output limit value, in the status that an air-fuel ratio is maintained at a theoretical air-fuel ratio (Example 1).
Fig. 4 is a view showing correlation of Fig. 3 and change of operational status (Example 1).
Fig. 5 is a view showing temporal responses of a gas calorific value (a), an actual power generation output (b), a power generation output limit value (c), and a throttle aperture (d) (Example 1).
Fig. 6 is a schematic view showing an engine, an engine control system, and a fuel source (Example 2).
Fig. 7 is a flow chart of output control (Example 2).
Fig. 8 is a flow chart of output control (Example 3).
Fig. 9 is a schematic view showing an engine, an engine control system, and a fuel source (Example 4).
Fig. 10 is a flow chart of output control (Example 4).
Fig. 11 is a flow chart of output control (Example 5).
Fig. 12 is a schematic view showing an engine, an engine control system, and a fuel source (Example 6).
Fig. 13 is a flow chart of output control (Example 6).
Fig. 14 is a schematic view showing an engine, an engine control system, and a fuel source (Example 7).
Fig. 15 is a flow chart of output control (Example 7).
Fig. 16 is a schematic view showing an engine, an engine control system, and a fuel source (Example 8).
Fig. 17 is a flow chart of output control (Example 8).
Fig. 18 is a view showing temporal responses of concentration of each component and lower calorific value (LHV) of fuel, about the fuel supplied from a gasification furnace.
Fig. 19 is a view showing temporal responses of a generated gas volume (a), a gas calorific value (b), a possible generator output (c), and a throttle aperture (d).

### Description of Embodiments

### [Example 1]

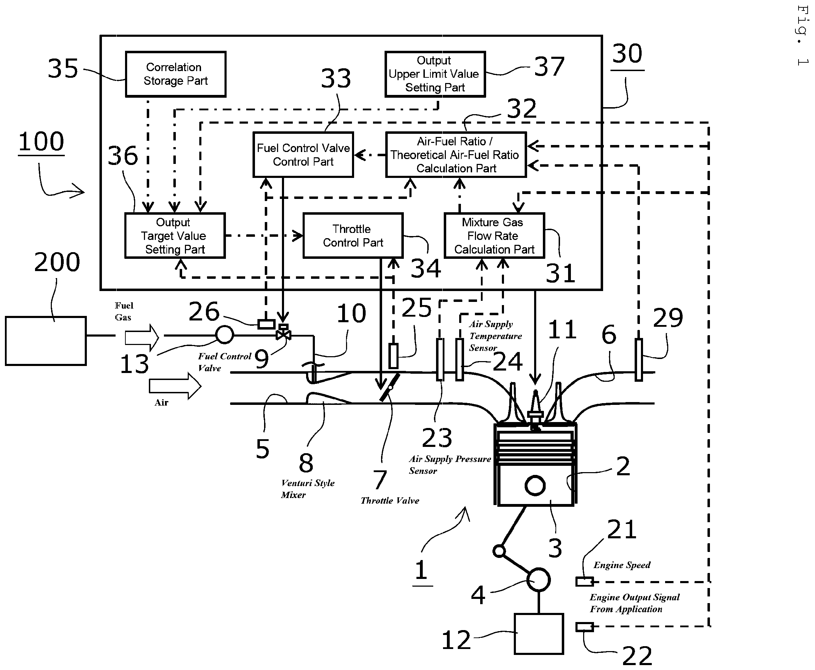

Fig. 1 is a schematic view showing an engine 1, an engine control system 100, and a fuel source 200 (Example 1). In Fig. 1, the engine 1 has a cylinder 2, a piston 3, a crankshaft 4, an air supply pipe 5, an exhaust pipe 6, a throttle valve 7, a Venturi style mixer 8, a fuel control valve 9, a fuel piping 10, a spark plug 11, and a gas pressure regulator 13. That is, the engine 1 is a premixed-gas-combustion engine which has a fuel control valve and a mixer. The throttle valve 7 and the Venturi style mixer 8 are arranged in the air supply pipe 5. The throttle valve 7 is in the lower stream side of the Venturi style mixer 8 in an air supply direction. The fuel piping 10 supplies fuel to the Venturi style mixer 8 from the fuel source 200. The fuel control valve 9 is arranged on the pathway of the fuel piping 10. The gas pressure regulator 13 controls pressure of the fuel supplied to the Venturi style mixer 8. The gas pressure regulator 13 is arranged at the upper stream side of the fuel control valve 9, on the pathway of the fuel piping 10. Moreover, the crankshaft 4 is connected to the generator 12.

The fuel source 200 supplies the fuel where a calorific value per unit volume changes in time, to the engine 1. The fuel source 200 is a gasification furnace which generates fuel gas by carrying out pyrolysis of wood waste, for example.

The engine control system 100 has an engine speed sensor 21, an output sensor 22, an air supply pressure sensor 23, an air supply temperature sensor 24, a throttle aperture sensor 25, a fuel control valve aperture sensor 26, an oxygen sensor 29, and a control device 30. The engine speed sensor 21 detects speed of the engine 1, i.e. a number of rotations of the crankshaft 4. The output sensor 22 detects output of the engine 4, i.e., output of the crankshaft 4, based on power generation electric power of the generator 12. The air supply pressure sensor 23 detects air supply pressure (pressure of mixture gas) in the air supply pipe 5, in the lower stream side of the throttle valve 7. The air supply temperature sensor 24 detects air supply temperature (temperature of mixture gas) in the air supply pipe 5, in the lower stream side of the throttle valve 7. The throttle aperture sensor 25 detects an aperture in the air supply pipe 5 set by the throttle valve 7. The fuel control valve aperture sensor 26 detects an aperture in the fuel piping 10 set by the fuel control valve 9. The oxygen sensor 29 detects oxygen concentration in exhaust gas. The oxygen sensor 29 is arranged in the exhaust pipe 6. Hereinafter, a throttle aperture means the aperture in the air supply pipe 5 set by the throttle valve 7, and a fuel control valve aperture means the aperture in the fuel piping 10 set by the fuel control valve 9.

The control device 30 controls operation timing of the spark plug 11, the throttle aperture, and the fuel control valve aperture, based on detected information acquired by various sensors. The control device 30 consists of hardware, such as a CPU and a memory, and a program which operates the hardware.

The control device 30 has a mixture gas flow rate calculation part 31, an air-fuel ratio / theoretical air-fuel ratio calculation part 32, a fuel control valve control part 33, a throttle control part 34, a correlation storage part 35, an output target value setting part 36, and an output upper limit value setting part 37. The calculation part 31 calculates an actual value of a mixture gas flow rate. The calculation part 32 calculates an actual value of a theoretical air-fuel ratio, and an actual value of an air-fuel ratio. The control part 33 controls the fuel control valve aperture so that the actual value of the air-fuel ratio coincides with the theoretical air-fuel ratio. The control part 34 controls the throttle aperture so that an actual value of the output coincides with a target value of the output. The storage part 35 has memorized a generator output limit value. The setting part 36 sets the target value of the output. The setting part 37 sets an upper limit of the target value of the output, for example by a user's operation.

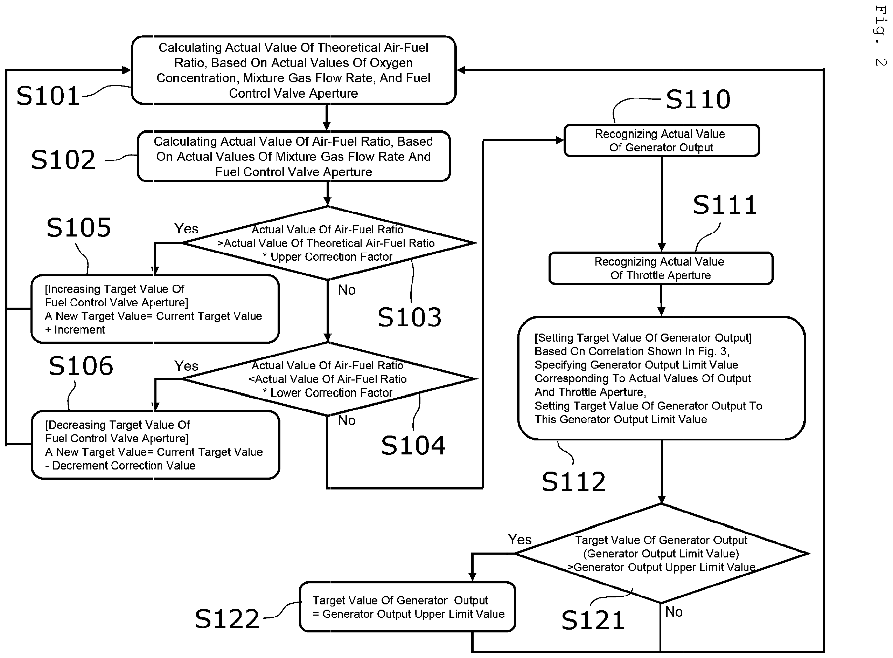

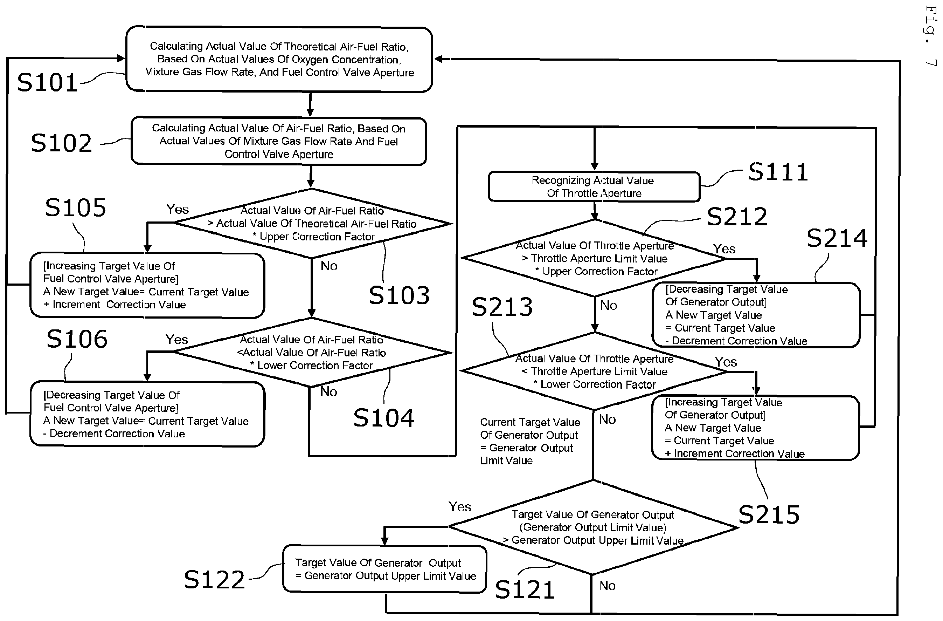

Referring to Fig. 2, described is flow of output control performed by the control device 30. Fig. 2 is a flow chart of output control. The output control Fig. 7 roughly makes the engine produce a possible maximum output in the calorific value at present, while maintaining the air-fuel ratio at the theoretical air-fuel ratio according to the change of the calorific value. The output control consists of target value tracking control, air-fuel ratio control, output limit value control, and output upper limit value control. The air-fuel ratio control consists of steps S101-S106, the output limit value control consists of steps S110-S112, and the output upper limit value control consists of steps S121-S122. The steps of target value tracking control are not illustrated.

The target value tracking control controls a throttle aperture so that an actual value of generator output coincides with an target value of the generator output. In the target value tracking control, the throttle control part 34 controls the throttle valve 7 so that the actual value of the generator output coincides with the target value of the generator output set by the output target value setting part 36. The target value tracking control is performed in parallel to the air-fuel ratio control, the output upper limit value control, and the output limit value control. Therefore, whenever the target value of the generator output is changed in the output upper limit value control and the output limit value control, the target value tracking control is performed based on the target value of the generator output after change.

Described is the steps S101-S106 of the air-fuel ratio control. The air-fuel ratio control controls the fuel control valve aperture so that the actual value of the air-fuel ratio coincides with the theoretical air-fuel ratio.

In the step S101, the air-fuel ratio / theoretical air-fuel ratio calculation part 32 calculates the actual value of the theoretical air-fuel ratio, based on an actual value of the oxygen concentration, an actual value of the mixture gas flow rate, and an actual value of the fuel control valve aperture.

The theoretical air-fuel ratio changes according to the change of the calorific value of the fuel. Generally, when the calorific value falls, in each component which constitutes the fuel, increasing is concentration of a component which has a low calorific value or does not contribute to combustion. Therefore, rise of the calorific value increases the theoretical air-fuel ratio, and fall of the calorific value decreases the theoretical air-fuel ratio.

Relation of formulas (1) and (2) is satisfied among the theoretical air-fuel ratio, the air flow rate in air supply gas, the fuel flow rate in the air supply gas, and the oxygen concentration in the exhaust gas. D=Ae/(A+F) (1), where D means the oxygen concentration, Ae means the air flow rate in the exhaust gas, A means the air flow rate in the air supply gas, and F means the fuel flow rate in the air supply gas. Ae=A-(A/F)t (2), where (A/F)t means the theoretical air-fuel ratio. The theoretical air-fuel ratio is specified by the formulas (1) and (2), based on the oxygen concentration, the air flow rate, and the fuel flow rate. On the other hand, the mixture gas flow rate is equal to the sum total of the air flow rate and the fuel flow rate. Furthermore, since the mixture gas is generated by the Venturi style mixer 8, the fuel control valve aperture determines a ratio of the fuel flow rate to the mixture gas flow rate. Therefore, the air flow rate and fuel flow rate in the air supply gas are specified based on the mixture gas flow rate and the fuel control valve aperture. Therefore, the theoretical air-fuel ratio is specified based on the oxygen concentration, the mixture gas flow rate, and the fuel control valve aperture.

Each element for specifying the actual value of the theoretical air-fuel ratio is detected by each sensor. The actual value of the oxygen concentration is detected by the oxygen sensor 29. The actual value of the mixture gas flow rate is calculated by the mixture gas flow rate calculation part 31 based on the actual value of the air supply temperature detected by the actual value of the air supply pressure detected by the air supply pressure sensor 23, and the actual value of the air supply temperature detected by the air supply temperature sensor 24. The actual value of the fuel control valve aperture is detected by the fuel control valve aperture sensor 26.

The step S102 is performed by the next of the step S101. In the step S102, the air-fuel ratio / theoretical air-fuel ratio calculation part 32 calculates the actual value of the air-fuel ratio based on the actual value of the mixture gas flow rate, and the actual value of the fuel control valve aperture. The actual value of the air-fuel ratio shows the ratio of the air flow rate to the fuel flow rate at present.

The steps S103 and S104 are performed by the next of the step S102. In the steps S103 and S104, the fuel control valve control part 33 judges whether the actual value of the air-fuel ratio is in a peripheral region of the actual value of the theoretical air-fuel ratio. The peripheral region means a strip region including the actual value of the theoretical air-fuel ratio. An upper limit of the peripheral region of the theoretical air-fuel ratio is a value acquired by multiplying the actual value of the theoretical air-fuel ratio by an upper correction factor. A lower limit of the peripheral region of the theoretical air-fuel ratio is a value acquired by multiplying the actual value of the theoretical air-fuel ratio by a lower correction factor. The upper correction factor is a little bigger value than 1, for example 1.02. The lower correction factor is a little smaller value than 1, for example 0.95.

In the step S103, the control part 33 judges whether the actual value of the air-fuel ratio is larger than a product of the actual value of the theoretical air-fuel ratio and the upper correction factor. When the actual value of the actual value of the air-fuel ratio is larger than the product of the actual value of the theoretical air-fuel ratio and the upper correction factor, the step S105 is performed. When the actual value of the actual value of the air-fuel ratio is smaller than or equal to the product of the actual value of the theoretical air-fuel ratio and the upper correction factor, the step S104 is performed.

In the step S104, the control part 33 judges whether the actual value of the air-fuel ratio is smaller than a product of the actual value of the theoretical air-fuel ratio and the lower correction factor. When the actual value of the air-fuel ratio is smaller than the product of the actual value of the theoretical air-fuel ratio and the lower correction factor, the step S106 is performed. When the actual value of the air-fuel ratio is larger than or equal to the product of the actual value of the theoretical air-fuel ratio and the lower correction factor, the air-fuel ratio control is completed and performed is the step S110 included in the output limit value control.

In the step S105, the control part 33 increases the target value of the fuel control valve aperture. A new target value of the fuel control valve aperture is generated by adding an increment correction value to the target value of the current fuel control valve aperture. The increment correction value is a positive value, and is a predetermined constant, or a variable proportional to the absolute value of difference between the actual value of the air-fuel ratio and the actual value of the theoretical air-fuel ratio. The control part 33 increases the fuel control valve aperture according to increment of the target value of the fuel control valve aperture.

In the step S106, the fuel control valve control part 33 decreases the target value of the fuel control valve aperture. A new target value of the fuel control valve aperture is generated by subtracting a decrement correction value from the target value of the current fuel control valve aperture. The decrement correction value is a positive value, and is a predetermined constant, or a variable proportional to the absolute value of difference of the actual value of the air-fuel ratio and the actual value of the theoretical air-fuel ratio. The control part 33 decreases the fuel control valve aperture according to decrement of the target value of the fuel control valve aperture.

After the step S105 or S106 is completed, the air-fuel ratio control is completed and the step S101 is performed again.

The air-fuel ratio control is performed while the actual value of the air-fuel ratio is out of the peripheral region of the actual value of the theoretical air-fuel ratio. When realized is status where the actual value of the air-fuel ratio is approximately maintained at the actual value of the theoretical air-fuel ratio, the air-fuel ratio control will be completed.

Described are the steps S110-S112 of the output limit value control. The output limit value control sets the target value of the generator output to the generator output limit value. The generator output limit value means a size of the possible generator output, accurately is a size of the output acquired when the air-fuel ratio is maintained at the theoretical air-fuel ratio and the throttle aperture is maintained at a predetermined limit value.

In the step S110, the output target value setting part 36 recognizes the actual value of the generator output. The actual value of the generator output is detected by the output sensor 22.

The step S111 is performed by the next of the step S110. In the step S111, the setting part 36 recognizes the actual value of the throttle aperture.

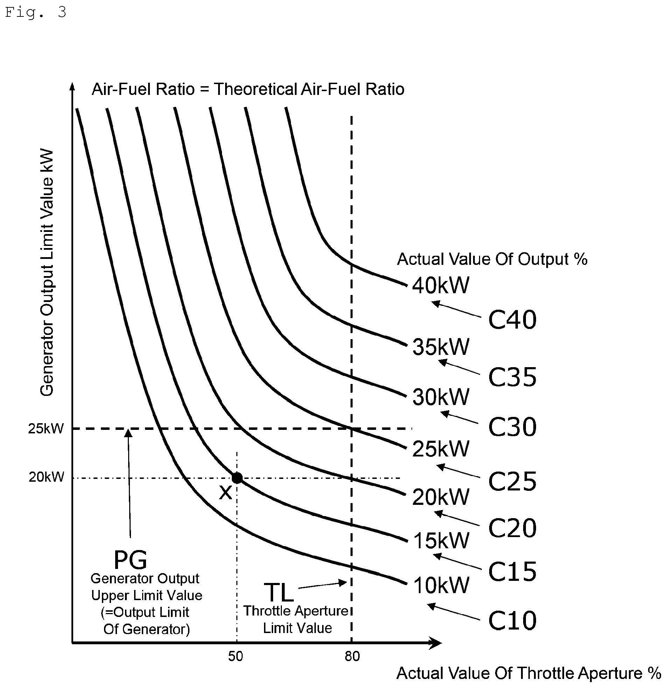

The step S112 is performed by the next of the step S111. In the step S112, the setting part 36 sets the target value of the generator output to the generator output limit value. The generator output limit value is specified based on the correlation shown in Fig. 3.

Fig. 3 is a view showing correlation of an output, a throttle aperture, and power generation output limit value, in the status that an air-fuel ratio is maintained at a theoretical air-fuel ratio. In Fig. 3, a correlation graph is illustrated for every current value of the output. The correlation graphs C10, C15, C20, C25, C30, C35, and C40 respectively correspond to current values 10kw, 15kw, 20kw, 25kw, 30kw, 35kw, and 40kw of the output.

The generator output limit value is a size of the output acquired when the air-fuel ratio is maintained at the theoretical air-fuel ratio and the throttle aperture is maintained at the predetermined limit value. The throttle aperture limit value as the predetermined limit value is 80%, for example. Therefore, the generator output limit value is the output acquired, for example when the throttle aperture is maintained to 80%. In operational status of a point x in Fig. 3, the current value of the output is 15kw and the current value of the throttle aperture is 50%. In a coordinate of the point x, the generator output limit values are 20kw. In fact, this means that the generator output can be increased to 20kw by increasing the throttle aperture to 80%, when the current value of the generator output is 15kw by maintaining the throttle aperture to 50%. However, since the limit value of the throttle aperture is set to 80%, the possible generator output is restricted to 20kw. Thus, the generator output limit value is a value which is restricted by the limit value of the throttle aperture.

In the step S112, used are the actual value of the output and the actual value of the throttle aperture which are acquired in the steps S110 and S111, as the current value of the output and the current value of the throttle aperture. The setting part 36 specifies the generator output limit value corresponding to the actual value of the output and the actual value of the throttle aperture based on Fig. 3, and sets the generator output limit value to the target value of the generator output.

The output limit value control is completed by the end of the step S112. By the output limit value control, the target value of the output is set to the generator output limit value corresponding to the calorific value.

Described is the steps S121-S122 of the output upper limit value control. The output upper limit value control sets the target value of the generator output so that the target value of the generator output may not exceed a generator output upper limit value. The generator output upper limit value means the output limit of the generator 12.

The step S121 is performed by the next of the step S112. In the step S121, the output target value setting part 36 judged whether the target value of the generator output set in the output limit value control is larger than the generator output upper limit value. The generator output upper limit value is beforehand set by the output upper limit value setting part 37. When the target value of the generator output is larger than the generator output upper limit value, the step S112 is performed. When the target value of the generator output is equal to or smaller than the generator output upper limit value, the output upper limit value control is completed and the step S101 is performed again.

In the step S112, the setting part 36 sets the target value of the generator output to the generator output upper limit value. After the step S112 is completed, the output upper limit value control is completed and the step S101 is performed again.

The target value of the generator output is set to a maximum defined by the calorific value in the output limit value control, and also is set below to a maximum defined by output limit of the generator 12 in the output upper limit value control.

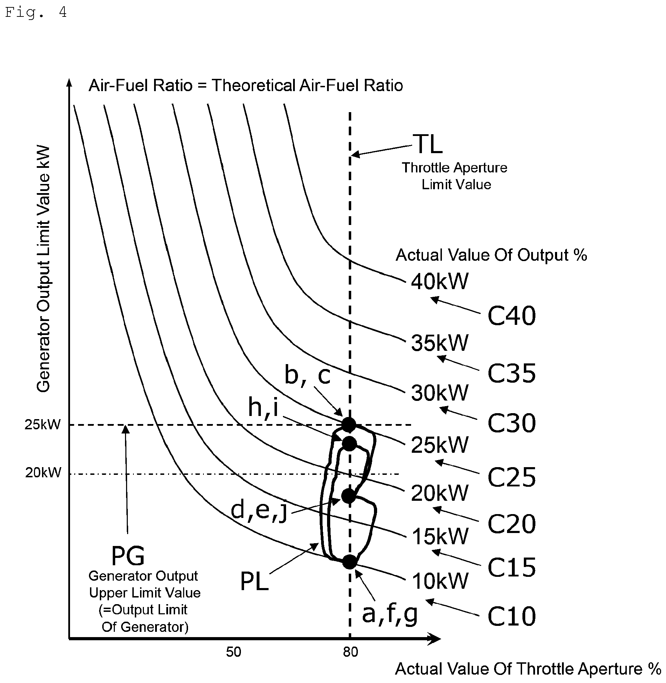

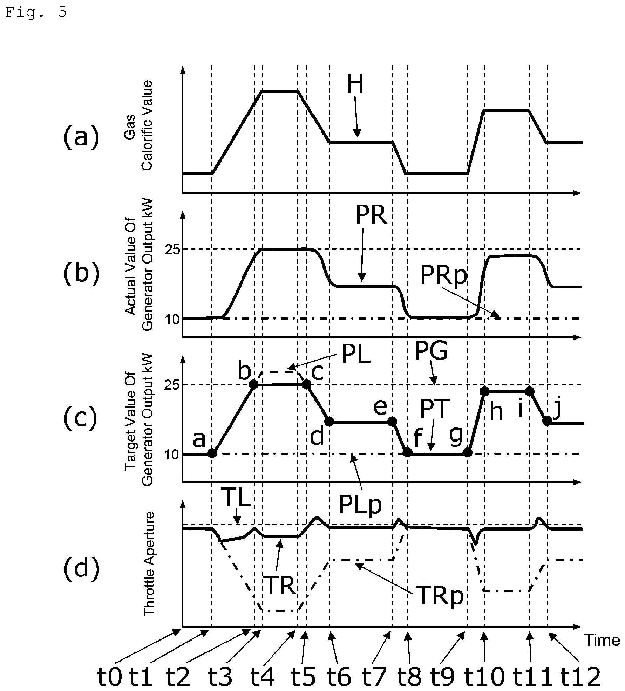

Referring to Fig. 4 and Fig. 5, Described is temporal responses of the generator output limit value and the throttle aperture, by the output control. Fig. 4 is a view showing correlation of Fig. 3 and change of operational status. In Fig. 4, points a-j show operational status of the engine 1. Fig. 5 is a view showing temporal responses of a gas calorific value (a), an actual power generation output (b), a power generation output limit value (c), and a throttle aperture (d). The horizontal axis of Fig. 5 shows a time-axis. Time t1-t12 is shown on the time-axis.

In Fig. 5 (a), a solid line shows a temporal response of a calorific value H.

In Fig. 5 (b), a solid line shows a temporal response of an actual value PR of generator output in output control, and an one-dot chain line shows a temporal response of an actual value PRp of generator output in conventional fixed output control.

In Fig. 5 (c), a solid line shows a temporal response of target value PT of generator output in output control, a dashed line shows a temporal response of generator output limit value PL in output control, and an one-dot chain line shows a target value PTp of generator output in conventional fixed output control. From time t2 to time t5, although the target value PT differs from the generator output limit value PL, in other time, the target value PT and the generator output limit value PL are in agreement.

In Fig. 5 (d), a solid line shows a temporal response of an actual value TR of a throttle aperture in output control, and an one-dot chain line shows a temporal response of an actual value TRp of a throttle aperture in conventional fixed output control.

In Fig. 5, the calorific value H is constant from time t0 to time t1, an actual value P of the generator output is constant (10kw), the actual value TR of the throttle aperture is approximately maintained at a throttle aperture limit value TL, and the target value PT of the generator output is constant. A point a of Fig. 4 shows the operational status of the time t1.

In Fig. 5, the calorific value H is increasing from the time t1 to time t3. According to this, the target value PT of the generator output is increasing from the time t1 to time t2, the actual value PR of the generator output is increasing, and although the actual value TR of the throttle aperture falls temporarily, the actual value TR is approximately maintained at the throttle aperture limit value TL. A point b of Fig. 4 shows the operational status of the time t2. Change from the point a to the point b has occurred according to increment of the theoretical air-fuel ratio with accompanying increment of the calorific value. In the status that the air-fuel ratio is maintained at the theoretical air-fuel ratio, the ratio of the fuel flow rate to the mixture gas flow rate becomes small according to increment of the theoretical air-fuel ratio. As a result, since the output increases, the correlation graph used to specify the generator output limit value PL is changed from the correlation graph C10 into the correlation graph being in the high output side. As a result, the change from the point a to the point b occurs.

In Fig. 5, the calorific value H is increasing not only from the time t1 to the time t2 but also from the time t2 to time t3. Although the generator output limit value PL is increasing from the time t2 to time t3, the target value PT of the generator output is maintained at the generator output upper limit value PG being constant. When the generator output limit value PL is higher than the generator output upper limit value PG, the target value PT of the generator output is set to the generator output upper limit value PG.

In Fig. 4, from the time t2 to the time t5, the correlation graph used to specify the generator output limit value PL is the correlation graph being in the high output side than the correlation graph C25. However, the correlation graph being in the high output side than the correlation graph C25 will exceed the generator output upper limit value PG on the periphery of the limit value TL of the throttle aperture. Therefore, in the region where the generator output limit value PL is higher than the generator output upper limit value PG, the target value PT of the generator output is set to the generator output upper limit value PG instead of the generator output limit value PL.

In Fig. 5, from the time t3 to time t4, the calorific value H is constant, the actual value P of the generator output is constant (25kw), the actual value TR of the throttle aperture is approximately maintained at the throttle aperture limit value TL, and the target value PT of the generator output is maintained at the generator output upper limit value PG.

In Fig. 5, the calorific value H is decreasing from the time t4 to time t6. Since the generator output limit value PL is higher than the generator output upper limit value PG from the time t4 to the time t5, the target value PT of the generator output is maintained at the generator output upper limit value PG. In the meantime, the actual value TR of the throttle aperture increases so that the fall of the output by decrement in the theoretical air-fuel ratio may be compensated. A point c of Fig. 4 shows the operational status of the time t5.

In Fig. 5, from the time t5 to the time t6, the target value PT of the generator output decreases according to decrement in the calorific value. In the meantime, although the actual value TR of the throttle aperture changes, the actual value TR is approximately maintained at the throttle aperture limit value TL, and the actual value PR of the generator output is decreasing. A point d of Fig. 4 shows the operational status of the time t6. Change from the point c to the point d has occurred by decrement of the theoretical air-fuel ratio with accompanying decrement in calorific value. In the status that the air-fuel ratio is maintained at the theoretical air-fuel ratio, the ratio of the fuel flow rate to the mixture gas flow rate becomes large by decrement in the theoretical air-fuel ratio. As a result, since the output decreases, the correlation graph used to specify the generator output limit value PL is changed into the correlation graph being in the low output side from the correlation graph C25. As a result, change from the point c to the point d occurs.

Changes of the calorific value H, the actual value PR of the generator output, the target value PT of the generator output, and the actual value TR of the throttle aperture, after the time t6 are the same as the changes from the time t0 to the time t6.

In conventional constant output control shown with an one-dot chain line in Fig. 5, the target value PLp of the generator output is maintained at a constant value, and, as a result, the actual value PRp of the generator output also becomes to be a constant value. The throttle aperture is changing in inverse proportion to change of the calorific value. Therefore, an amount of use of the fuel gas falls as the calorific value falls.

Example 1 has the following operation and effect. As shown in Fig. 5, the target value PT of the generator output changes according to change of the calorific value H. Since the target value PT of the generator output is set so that the actual value TR of the throttle aperture may be maintained at the predetermined throttle aperture limit value TL, the occurrence of loss of output control is prevented. Therefore, Example 1 can heighten the generator output as much as possible according to change of the calorific value, while preventing the occurrence of loss of output control.

Moreover, Example 1 can restrict not only the generator output limit value specified by the theoretical air-fuel ratio and the throttle aperture limit value TL but also the target value of the generator output based on the generator output upper limit value. In Example 1, the generator output upper limit value is an output limit of the generator 12. Therefore, Example 1 can prevent the occurrence of loss of output control by changing the maximum of the generator output if needed.

### [Example 2]

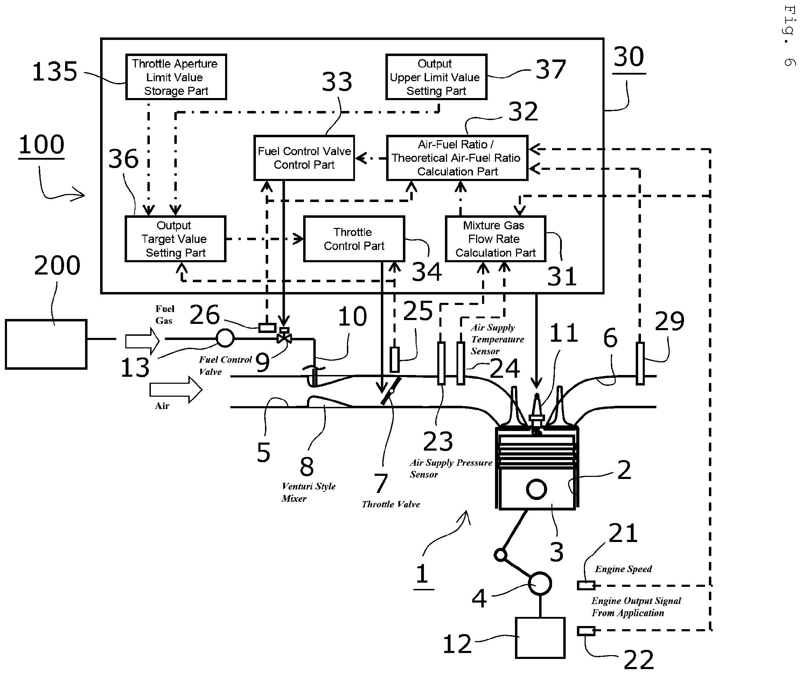

Fig. 6 is a schematic view showing an engine 1, an engine control system 100, and a fuel source 200. Example 2 differs from Example 1 in composition of the output limit value control. In Example 1, the generator output limit value is specified by the correlation of the output, the throttle aperture, and the generator output limit value. On the other hand, in Example 2, the generator output limit value is specified by changing or maintaining the target value of the generator output so that the throttle aperture is maintained at the throttle aperture limit value. Described below are differences between Example 2 and Example 1.

In Fig. 6, the engine control system 100 according to Example 2 has a throttle aperture limit value storage part 135 instead of the correlation storage part 35. The throttle aperture limit value storage part 135 has memorized the throttle aperture limit value. Moreover, the output target value setting part 36 sets the target value of the output based on the actual value of the throttle aperture and the throttle aperture limit value.

Referring to Fig. 7, described is flow of the output control performed by the control device 30. Fig. 7 is a flow chart of output control. The output control consists of the target value tracking control, the air-fuel ratio control, the output limit value control, and the output upper limit value control. As mentioned above, only the output limit value control differs between Example 1 and Example 2. The output limit value control consists of the steps S111 and S212-S215.

Described are the steps S111 and S212-S215 of output limit value control. The output limit value control sets the target value of the generator output to the generator output limit value.

The step S111 is performed by the next of the step S104 included in the air-fuel ratio control. In the step S111, the output target value setting part 36 recognizes the actual value of the throttle aperture. The step S111 is the same between Example 1 and Example 2.

The steps S212 and S213 are performed by the next of the step S111. In the steps S212 and S213, the setting part 36 judges whether the actual value of the throttle aperture is in the peripheral region of the throttle aperture limit value. The peripheral region means a strip region including the throttle aperture limit value. The upper limit of the peripheral region of the throttle aperture limit value is a value acquired by multiplying the throttle aperture limit value by the upper correction factor. The lower limit of the peripheral region of the throttle aperture limit value is a value acquired by multiplying the throttle aperture limit value by the lower correction factor. The upper correction factor is a little bigger value than 1, for example 1.02. The lower correction factor is a little smaller value than 1, for example, 0.95.

In the step S212, the setting part 36 judges whether the actual value of the throttle aperture is larger than a product of the throttle aperture limit value and the upper correction factor. When the actual value of the throttle aperture is larger than the product of the throttle aperture limit value and the upper correction factor, the step S214 is performed. When the actual value of the throttle aperture is smaller than or equal to the product of the throttle aperture limit value and the upper correction factor, the step S213 is performed.

In the step S213, the setting part 36 judges whether the actual value of the throttle aperture is smaller than a product of the throttle aperture limit value and the upper correction factor. When the actual value of the throttle aperture is smaller than the product of the throttle aperture limit value and the upper correction factor, the step S215 is performed. When the actual value of the throttle aperture is larger than or equal to the product of the throttle aperture limit value and the upper correction factor, the output limit value control is completed and the step S121 is performed.

In the step S214, the setting part 36 decreases the target value of the generator output. A new target value of the generator output is generated by subtracting a decrement correction value to the target value of the current generator output. The decrement correction value is a positive value, and is a predetermined constant, or a variable proportional to the absolute value of difference of the actual value of the throttle aperture and the throttle aperture limit value. In the target value tracking control, the throttle control part 34 decreases the throttle aperture according to decrement of the target value of the generator output by the setting part 36. As a result, the actual value of the generator output decreases.

In the step S215, the setting part 36 increases the target value of the generator output. A new target value of the generator output is generated by adding an increment correction value to the target value of the current generator output. The increment correction value is a positive value, and is a predetermined constant, or a variable proportional to the absolute value of difference of the actual value of the throttle aperture and the throttle aperture limit value. In the target value tracking control, the throttle control part 34 increases the throttle aperture according to increment in the target value of the generator output by the setting part 36. As a result, the actual value of the generator output increases.

After the step S214 or S215 is completed, the output limit value control is completed and the step S111 is performed again.

As long as the actual value of the throttle aperture is out of the peripheral region of the throttle aperture limit value, the steps S111 and S212-S215 are repeatedly carried out. The generator output limit value is the generator output in case that the actual value of the throttle aperture is in the peripheral region of the throttle aperture limit value. That is, the output limit value control is performed until the actual value of the generator output coincides with the generator output limit value.

### [Example 3]

Example 3 differs from Example 2 in composition of the output limit value control. In Example 2, the throttle aperture is used as a controlled variable for setting the target value of the output to the output limit value. On the other hand, in Example 3, the air supply pressure is used as a controlled variable for setting the target value of the output to the output limit value. Described below are differences between Example 3 and Example 2.

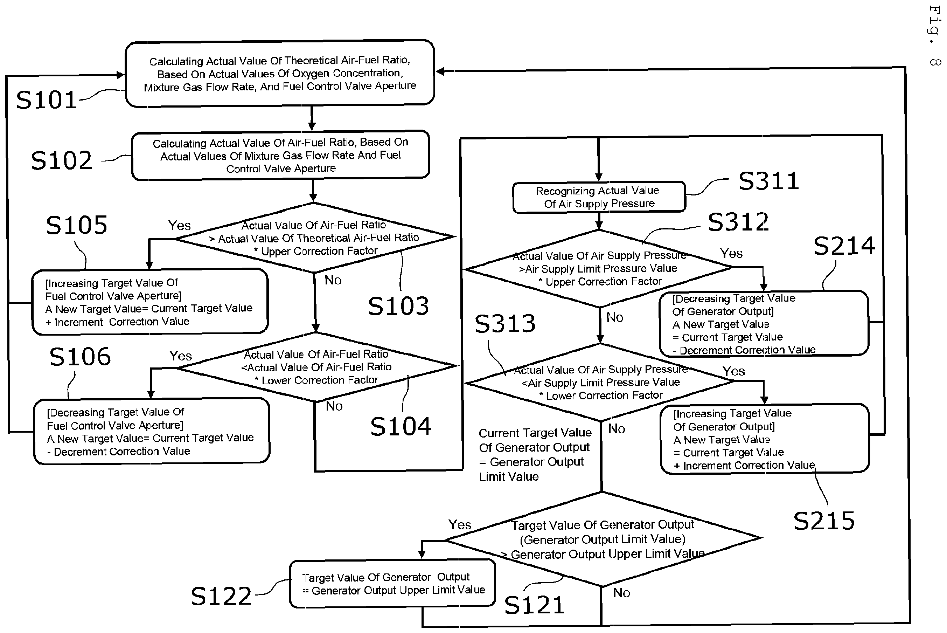

Referring to Fig. 8, described is flow of the output control performed by the control device 30. Fig. 8 is a flow chart of output control. The output control consists of the target value tracking control, the air-fuel ratio control, the output limit value control, and the output upper limit value control. As mentioned above, only the output limit value control differs between Example 1 and Example 2. The output limit value control consists of steps S311-S313 and S214-S215.

In the steps S311-S313, the throttle aperture and the throttle aperture limit value in the steps S111, S212-S213 are replaced by the air supply pressure and the air supply limit pressure value. The upper correction factor and the lower correction factor according to the air supply limit pressure value in the steps S312, S313 are also set as with the upper correction factor and lower correction factor according to the throttle aperture limit value in the steps S212, S213.

### [Example 4]

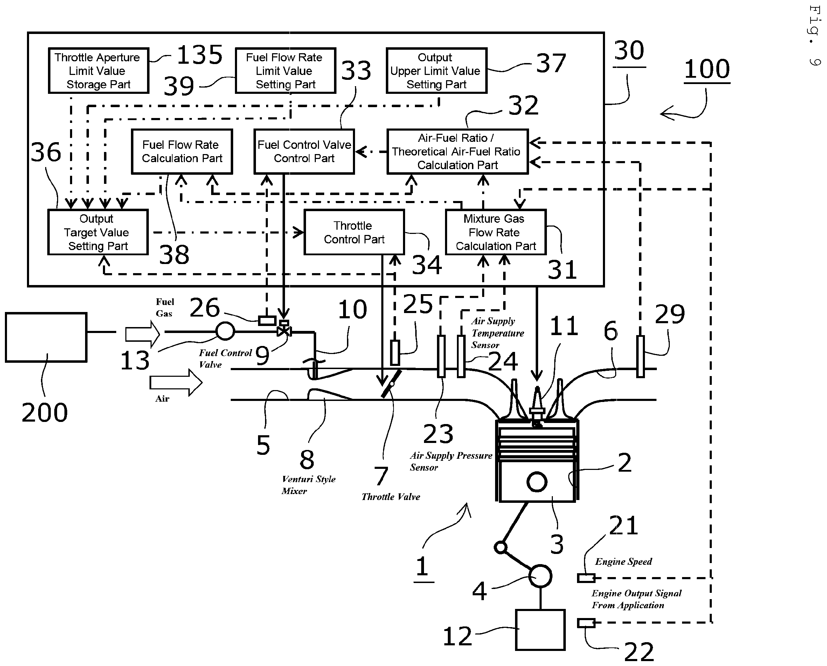

Fig. 9 is a schematic view showing an engine 1, an engine control system 100, and a fuel source 200. Example 4 differs from Example 2 in composition of the output control. The output control in Example 4 further includes fuel flow rate restriction control, in addition to the output control in Example 2.

In Fig. 9, the engine control system 100 according to Example 4 further has a fuel flow rate calculation part 38 and a fuel flow rate limit value setting part 39, in addition to the composition of Example 2. The calculation part 38 calculates the actual value of the fuel flow rate based on the actual value of the fuel control valve aperture, and the actual value of the mixture gas flow rate. The setting part 39 sets the upper limit of the target value of the output, for example by a user ' s operation. Moreover, in Example 4, the output target value setting part 36 changes or maintains the target value of the generator output, based on the actual value of the fuel flow rate.

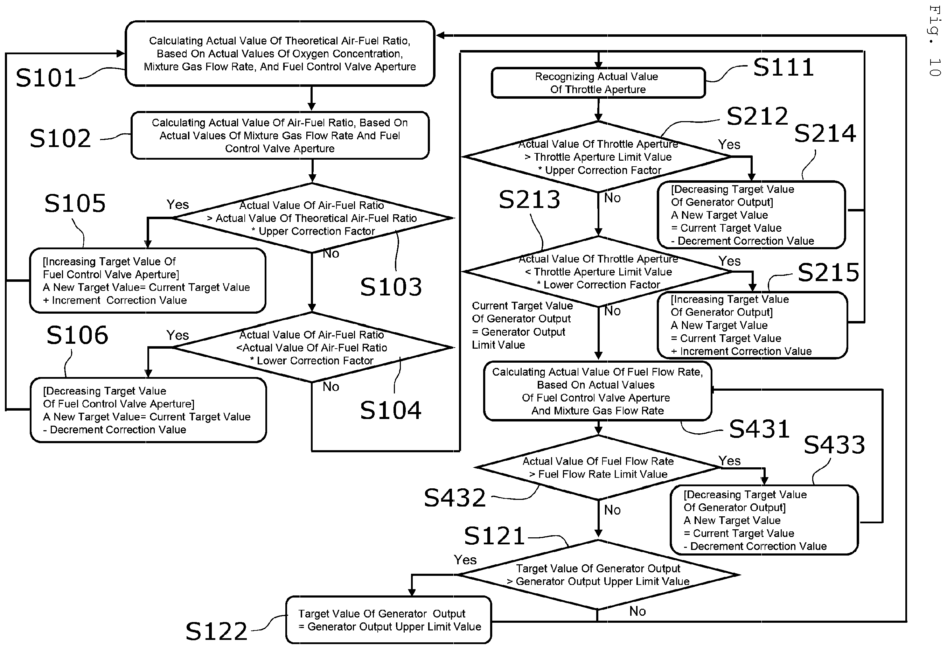

Referring to Fig. 10, described is flow of the output control performed by the control device 30. Fig. 10 is a flow chart of output control. The output control in Example 4 consists of the target value tracking control, the air-fuel ratio control, the output limit value control, the output upper limit value control, and the fuel flow rate restriction control. The fuel flow rate restriction control consists of steps S431-S433.

Described are the steps S431-S433 of the fuel flow rate restriction control. The fuel flow rate restriction control makes the actual value of the fuel flow rate coincide with the fuel flow rate limit value, by decreasing the target value of the output, when the actual value of the fuel flow rate is higher than the fuel flow rate limit value.

The step S431 is performed by the next of the step S213 included in the output limit value control. In the step S431, the fuel flow rate calculation part 38 calculates the actual value of the fuel flow rate, based on the actual value of the fuel control valve aperture and the actual value of the mixture gas flow rate. Since the fuel control valve aperture determines the air-fuel ratio, the fuel flow rate is specified based on the fuel control valve aperture and the mixture gas flow rate. The actual value of the fuel control valve aperture is detected by the fuel control valve aperture sensor 26. The actual value of the mixture gas flow rate is calculated by the mixture gas flow rate calculation part 31.

The step S432 is performed by the next of the step S431. In the step S432, the output target value setting part 36 judges whether the actual value of the fuel flow rate is higher than the fuel flow rate limit value. The fuel flow rate limit value is beforehand set by the fuel flow rate limit value setting part 39. When the actual value of the fuel flow rate is higher than the fuel flow rate limit value, the step S433 is performed. When the actual value of the fuel flow rate is equal to or lower than the fuel flow rate limit value, the fuel flow rate restriction control is completed and the step S121 included in the output upper limit value control is performed.

In the step S433, the setting part 36 decreases the target value of the generator output. A new target value of the new generator output is generated by subtracting a decrement correction value to the target value of the current generator output. The decrement correction value is a positive value, and is a predetermined constant, or a variable proportional to the absolute value of difference of the actual value of the fuel flow rate and the fuel flow rate limit value. In the target value tracking control, the throttle control part 34 decreases the throttle aperture according to decrement of the target value of the generator output by the setting part 36. As a result, the actual value of the generator output decreases.

After the step S433 is completed, the step S431 is performed again.

As long as the actual value of the fuel flow rate is higher than the fuel flow rate limit value, the steps S431-S433 are repeatedly carried out.

Example 4 has the following operation and effect. The target value of the generator output can be restricted based on the fuel flow rate limit value, in addition to the generator output limit value. Therefore, Example 4 can prevent the occurrence of loss of output control by restricting the target value of the generator output according to the size of the fuel flow rate, when the size of the fuel flow rate is restricted.

### [Example 5]

Example 5 differs from Example 4 in composition of output limit value control. In Example 4, the throttle aperture is used as a controlled variable for setting the target value of the output to the output limit value. On the other hand, in Example 5, the air supply pressure is used as a controlled variable for setting the target value of the output to the output limit value. That is, changed portion from Example 4 to Example 5 is equal to changed portion from Example 2 to Example 3. Described below are differences between Example 5 and Example 4.

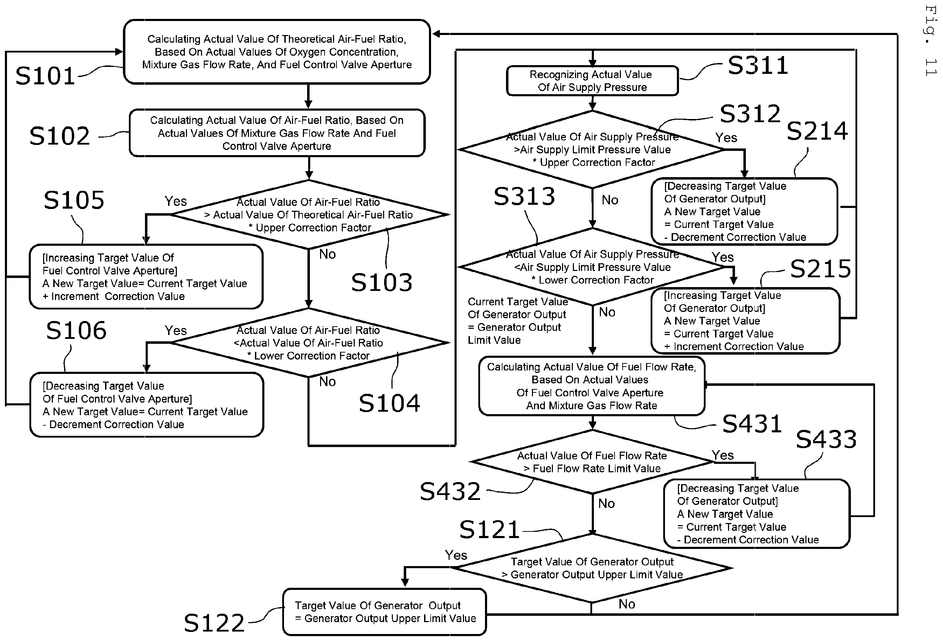

Fig. 11 is a flow chart of output control. In flow of Fig. 11 (Example 5), the steps S111 and S212-S213 included in the output limit value control of Fig. 10 (Example 4) are replaced by the steps S311-S313 included in the output limit value control of Fig. 8 (Example 3).

### [Example 6]

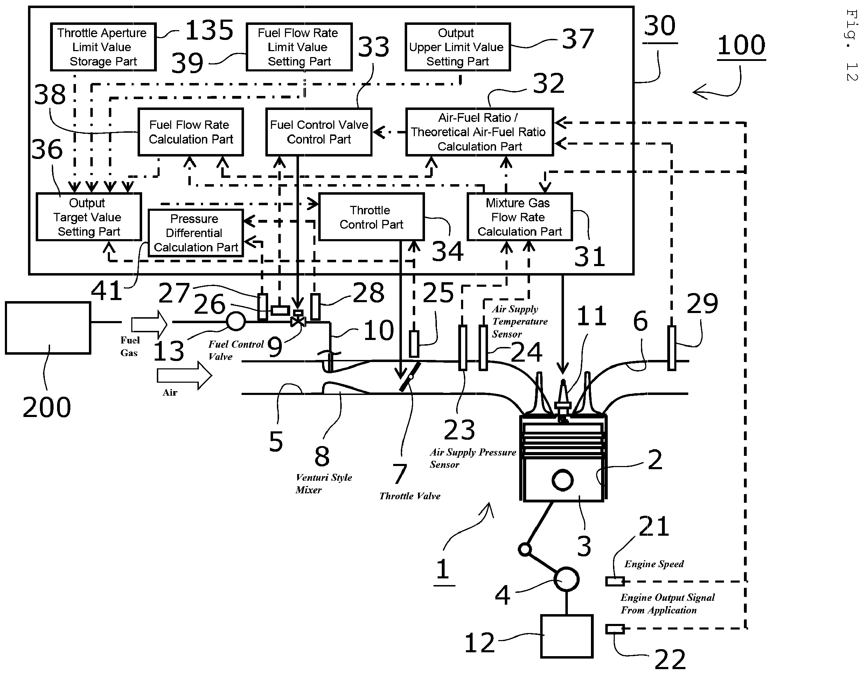

Fig. 12 is a schematic view showing an engine 1, an engine control system 100, and a fuel source 200. Example 6 differs from Example 4 in composition of the fuel flow rate restriction control. In Example 6, a pressure differential between the upper stream side and the lower stream side of the fuel control valve 9, and the mixture gas flow rate are used as a controlled variable for specifying the fuel flow rate in the fuel flow rate restriction control. On the other hand, in Example 4, the fuel control valve aperture and the mixture gas flow rate are used as a controlled variable for specifying the fuel flow rate. Described below are differences between Example 6 and Example 4.

In Fig. 12, the engine control system 100 according to Example 6 further has an upper stream pressure sensor 27, a lower stream pressure sensor 28, and a pressure differential calculation part 41, in addition to composition of Example 4. On the pathway of the fuel piping 10, the upper stream pressure sensor 27 is arranged at the upper stream side of the fuel control valve 9, and the lower stream pressure sensor 28 is arranged at the lower stream side of the fuel control valve 9. The pressure differential calculation part 41 detects pressure differential of the fuel pressure between the upper stream side and the lower stream side of the fuel control valve 9, based on upper stream pressure acquired by the upper stream pressure sensor 27 and lower stream pressure acquired by the lower stream pressure sensor 28. Moreover, in Example 6, the fuel flow rate calculation part 38 calculates the actual value of the fuel flow rate based on the actual value of the pressure differential of the fuel pressure and the actual value of the mixture gas flow rate.

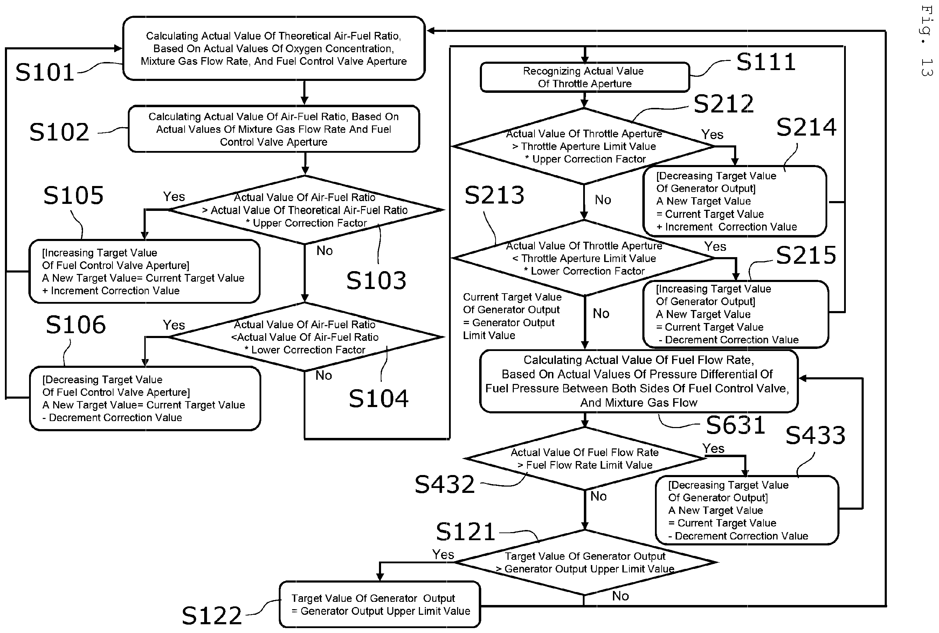

Fig. 13 is a flow chart of output control. In flow of Fig. 13 (Example 6), the step S431 included in the fuel flow rate restriction control of Fig. 10 (Example 4) is replaced by step S631. In the step S631, the actual value of the fuel control valve aperture in the step S431 is replaced by the actual value of the pressure differential of the fuel pressure between the upper stream side and the lower stream side of the fuel control valve 9.

### [Example 7]

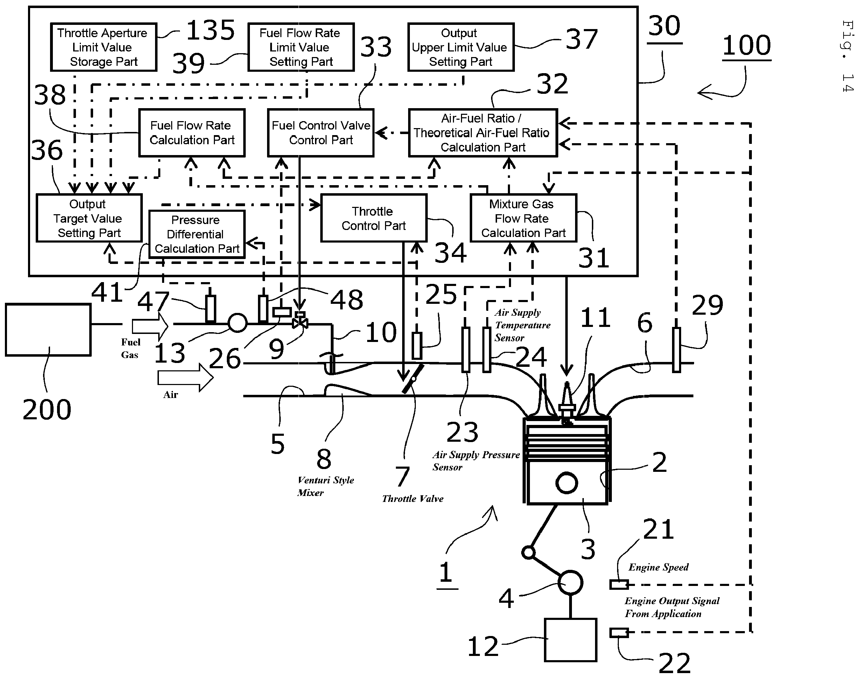

Fig. 14 is a schematic view showing an engine 1, an engine control system 100, and a fuel source 200. Example 7 differs from Example 6 in composition of the fuel flow rate restriction control. In Example 7, pressure differential between the upper stream side and the lower stream side of the gas pressure regulator 13, and the mixture gas flow rate are used as a controlled variable for specifying the fuel flow rate in the fuel flow rate restriction control. On the other hand, in Example 6, the pressure differential between the upper stream side and the lower stream side of the fuel control valve 9, the mixture gas flow rate are used as a controlled variable for specifying the fuel flow rate. Described below are differences between Example 7 and Example 6.

In Fig. 14, the engine control system 100 according to Example 7 has an upper stream pressure sensor 47 and a lower stream pressure sensor 48, in place of the upper stream pressure sensor 27 and the lower stream pressure sensor 28 in Example 4. On the pathway of the fuel piping 10, the upper stream pressure sensor 47 is arranged at the upper stream side of the gas pressure regulator 13, and the lower stream pressure sensor 48 is arranged at the lower stream side of the gas pressure regulator 13. Moreover, in Example 7, the pressure differential calculation part 41 detects pressure differential of the fuel pressure between the upper stream side and the lower stream side of the gas pressure regulator 13, based on upper stream pressure acquired by the upper stream pressure sensor 47, and lower stream pressure acquired by the lower stream pressure sensor 48.

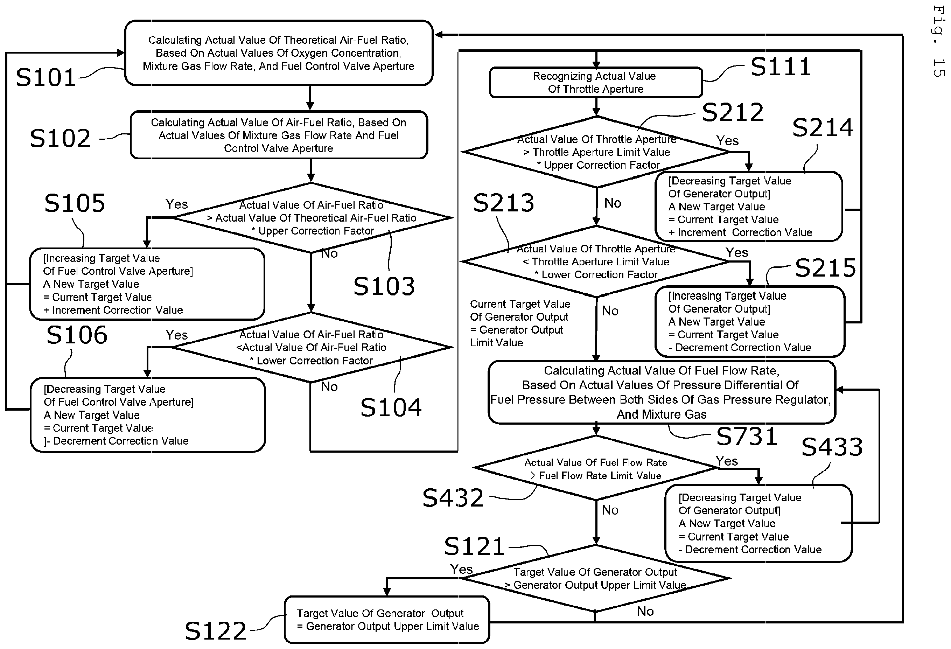

Fig. 15 is a flow chart of output control. In flow of Fig. 15 (Example 7), the step S631 included in the fuel flow rate restriction control of Fig. 13 (Example 6) is replaced by the step S731. In the step S731, the actual value of the pressure differential of the fuel pressure between the upper stream side and the lower stream side of the fuel control valve 9 is replaced by the actual value of the pressure differential of the fuel pressure between the upper stream side and the lower stream side of the gas pressure regulator 13.

### [Example 8]

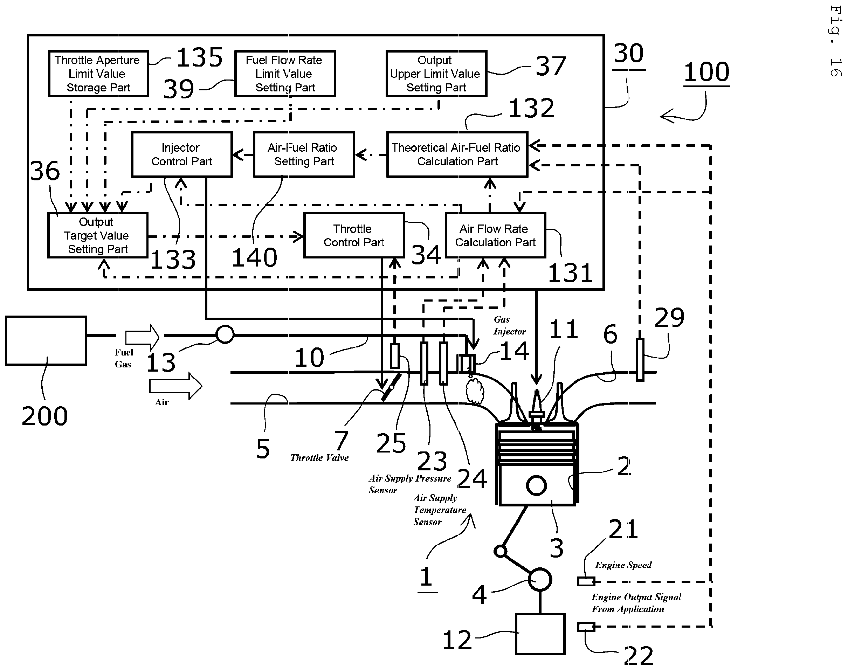

Fig. 16 is a schematic view showing an engine 1, an engine control system 100, and a fuel source 200. Example 8 has an injector 14 instead of the mixer 8. Therefore, in Example 8, composition according to the mixer is replaced by composition according to the injector. Moreover, the output control has also been partially changed corresponding to the injector. Described below are differences between Example 8 and Example 4.

In Fig. 16, the engine 1 in Example 8 has the injector 14 instead of the Venturi style mixer 8 and the fuel control valve 9 in Example 4. The injector 14 is arranged at the lower stream side of the throttle valve 7, in the air supply pipe 5. The injector 14 injects the fuel in the air supply pipe 5. Moreover, the control device 30 in Example 8 has an air flow rate calculation part 131, an theoretical air-fuel ratio calculation part 132, an injector control part 133, and an air-fuel ratio setting part 140, instead of the mixture gas flow rate calculation part 31, the air-fuel ratio / theoretical air-fuel ratio calculation part 32, the fuel control valve control part 33, and the fuel flow rate calculation part 38. The air flow rate calculation part 131 calculates the actual value of the air flow rate. The theoretical air-fuel ratio calculation part 132 calculates the theoretical air-fuel ratio. The injector control part 133 controls the fuel injection quantity by the injector 14. The air-fuel ratio setting part 140 sets the target value of the air-fuel ratio to the actual value of the theoretical air-fuel ratio.

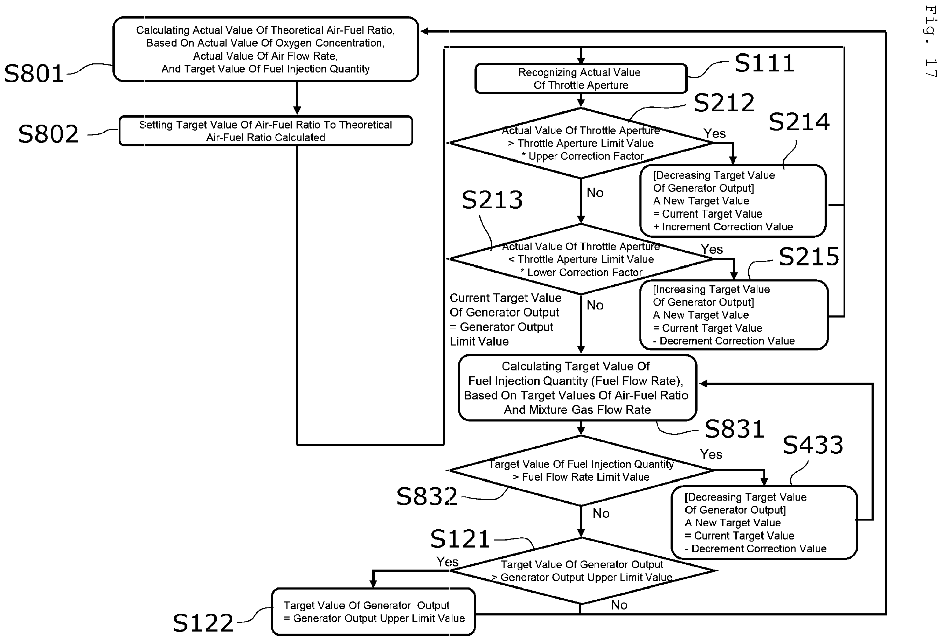

Fig. 17 is a flow chart of output control. The output control in Example 8 consists of the target value tracking control, the air-fuel ratio control, the output limit value control, the output upper limit value control, and the fuel flow rate restriction control as with Example 4. However, Example 8 differs from Example 4, in composition of the target value tracking control, the air-fuel ratio control, and the fuel flow rate restriction control.

The target value tracking control controls the fuel injection quantity by the injector 14 and the throttle aperture, so that the actual value of the generator output coincides with the target value of the generator output. The throttle control part 34 controls the throttle valve 7 so that the actual value of the generator output coincides with the target value of the generator output set by the output target value setting part 36. Moreover, the injector control part 133 controls the fuel injection quantity by the injector 14, according to change of the air flow rate by change of the throttle aperture, to maintain the air-fuel ratio set by the air-fuel ratio setting part 140. The target value tracking control is performed in parallel to the air-fuel ratio control, the output upper limit value control, and the output limit value control. Therefore, whenever the target value of the generator output is changed in the output upper limit value control and the output limit value control, the target value tracking control is performed based on the target value of the generator output after change.

Described are steps S801 and S802 of air-fuel ratio control.

In the step S801, the theoretical air-fuel ratio calculation part 132 calculates the actual value of the theoretical air-fuel ratio, based on the actual value of the actual value of the oxygen concentration, and the actual value of the air flow rate, and the target value of the fuel injection quantity. The fuel injection quantity is equal to the fuel flow rate. As mentioned above, the theoretical air-fuel ratio is specified based on the oxygen concentration, the air flow rate, and the fuel flow rate. Moreover, the actual value of the air flow rate is calculated by the air flow rate calculation part 131, based on the actual value of the air supply pressure detected by the air supply pressure sensor 23 and the actual value of the air supply temperature detected by the air supply temperature sensor 24.

The step S802 is performed by the next of the step S801. In the step S802, the air-fuel ratio setting part 140 sets the target value of the air-fuel ratio to the theoretical air-fuel ratio calculated by the theoretical air-fuel ratio calculation part 32. The air-fuel ratio control is completed by the end of the step S802.

In the fuel flow rate restriction control of Example 8, the steps S431 and S432 included in the fuel flow rate restriction control of Fig. 10 (Example 4) are replaced by steps S831 and S832. The step S831 is performed when the injector 14 is controlled by the injector control part 133. That is, in the step S831, the injector control part 133 calculates the target value of the fuel injection quantity, based on the target value of the air-fuel ratio and the actual value of the mixture gas flow rate. In the step S832, the output target value setting part 36 judges whether the target value of the fuel injection quantity is higher than the fuel flow rate limit value. In addition, the fuel injection quantity in Example 8 is equal to the fuel flow rate.

### [Variation]

The above Examples can apply the following modification.

### [An output]

The object controlled in Example 1 is the generator output of the generator 12 driven by the engine 1. The object controlled may be not the generator output but the output of the engine 1 itself. Hereinafter, the generator output and the output of the engine 1 are not distinguished.

### [A step of detecting an actual value of a fuel flow rate and an actual value of an air flow rate]

Example 1 detects the actual value of the mixture gas flow rate and the actual value of the fuel control valve aperture. The step of detecting the actual value of the mixture gas flow rate and the actual value of the fuel control valve aperture is an example of a step of detecting the actual value of the fuel flow rate and the actual value of the air flow rate. The step of detecting the actual value of the fuel flow rate and the actual value of the air flow rate, applicable to Example 1 is not limited to the step of detecting the actual value of the mixture gas flow rate and the actual value of the fuel control valve aperture. The throttle aperture can be used in place of the mixture gas flow rate. The fuel control valve aperture can be replaced with the pressure differential of the fuel pressure between the upper stream side and the lower stream side of the fuel control valve 9, the pressure differential of the fuel pressure between the upper stream side and the lower stream side of the gas pressure regulator 13, or the fuel injection quantity by the injector.

### [A step of detecting an actual value of a theoretical air-fuel ratio]

Example 1 detects the actual value of the fuel flow rate and the actual value of the air flow rate, by detecting the actual value of the mixture gas flow rate and the actual value of the fuel control valve aperture. As mentioned above, the step of detecting the actual value of the fuel flow rate and the actual value of the air flow rate is not limited to the step of detecting the actual value of the mixture gas flow rate and the actual value of the fuel control valve aperture.

### [A first controlled variable]

Example 1 controls the fuel injection valve aperture so that the actual value of the air-fuel ratio coincides with the actual value of the theoretical air-fuel ratio. The step of controlling the fuel control valve aperture is an example of the step of controlling the first controlled variable that determines the air-fuel ratio. The first controlled variable applicable to Example 1 is not limited to the fuel control valve aperture. As the first controlled variable, the fuel control valve aperture can be replaced with the pressure differential of the fuel pressure between the upper stream side and the lower stream side of the fuel control valve 9, the pressure differential of the fuel pressure between the upper stream side and the lower stream side of the gas pressure regulator 13, the fuel injection quantity by the injector and the throttle aperture, the fuel injection quantity by the injector and the air supply pressure, or the injector and the air supply pressure and the air supply temperature.

### [A second controlled variable]

Example 1 controls the throttle aperture so that the actual value of the output coincides with the target value of the output. The step of controlling the throttle aperture is an example of the step of controlling the second controlled variable that determines the air flow rate or the mixture gas flow rate. The second controlled variable applicable to Example 1 is not limited to the throttle aperture. As the second controlled variable, the throttle aperture can be replaced with the air supply pressure, or the air supply pressure and the air supply temperature.

### [An output limit value]

In Example 1, the output limit value is specified, based on the correlation (Fig. 3) of the output, the second controlled variable, and the output limit value. On the other hand, in other Examples, the output limit value is specified, based on the judgment processing which compares the actual value of the second controlled variable and the second limit value, without using the correlation. In Example 2, the second controlled variable is the throttle aperture, and the second limit value is the throttle aperture limit value. Other Examples can also adopt the composition which specifies the output limit value using the correlation.

### [A mixer and an injector]

Each of Examples 1-7 is the engine 1 using the mixer 8, and Example 8 is the engine 1 using the injector 14. The output control applied to Examples 1-7 is applicable to Example 8 using the injector 14, as long as it is possible to respond by replacement of controlled variables.

### Reference Signs List

- 1: Engine
- 7: Throttle Valve
- 8: Venturi Style Mixer
- 9: Fuel Control Valve
- 30: Control Device
- 31: Mixture gas Flow Rate Calculation Part
- 32: Air-fuel Ratio / Theoretical Air-fuel Ratio Calculation Part
- 33: Fuel Control Valve Control Part
- 34: Throttle Control Part
- 35: Correlation Storage Part
- 36: Output Target value Setting Part
- 37: Output Upper limit value Setting Part
- 100: Engine System
- 200: Fuel Source

## Claims

1. An engine control method for controlling an engine (1) which is supplied with fuel form a gasification furnace where a calorific value per unit volume of fuel changes, the engine control method comprising the steps of:
detecting an actual value of oxygen concentration in exhaust gas;
detecting an actual value of a fuel flow rate and an actual value of an air flow rate;
calculating an actual value of a theoretical air-fuel ratio changing according to the calorific value, based on the actual value of the oxygen concentration, the actual value of the mixture gas flow rate, and the actual value of the fuel control valve aperture;
controlling a first controlled variable determining the air-fuel ratio so that the actual value of the air-fuel ratio coincides with the actual value of the theoretical air-fuel ratio; wherein the first controlled variable is an aperture of a fuel control valve (9) for controlling a flow rate of the fuel supplied to a mixer (8);
setting a target value of an output of the engine to an output limit value;
detecting an actual value of the output; and
controlling a second controlled variable determining the air flow rate or a mixture gas flow rate so that the actual value of the output coincides with the target value of the output, wherein the second controlled variable is an aperture of a throttle valve (7); or the second controlled variable is air supply pressure;
wherein the output limit value is a size of the output acquired when the air-fuel ratio is maintained at the theoretical air-fuel ratio and the second controlled variable is maintained at a predetermined second limit value.

2. The engine control method according to claim 1,
wherein, in the step of setting the target value of the output, the output limit value corresponding to the actual value of the output and the actual value of the second controlled variable is specified, based on correlation among the output, the second controlled variable, and the output limit value, and target value of the output is set to the output limit value.

3. The engine control method according to claim 1,
wherein, in the step of setting the target value of the output, the target value of the output is set to the output limit value, by changing or maintaining the target value of the output so that the actual value of the second controlled variable is maintained at the second limit value.

4. The engine control method according to any one of claims 1-3, the engine control method further comprising the steps of:
setting an output upper limit value; and
coinciding the target value of the output with the output upper limit value when the target value of the output is higher than the output upper limit value.

5. The engine control method according to any one of claims 1-4, the engine control method further comprising the steps of:
setting a fuel flow rate limit value; and
coinciding the actual value of the fuel flow rate with the fuel flow rate limit value by decreasing the target value of the output, when the actual value of the fuel flow rate is higher than the fuel flow rate limit value.

6. The engine control method according to claim 5,
wherein a controlled variable for specifying the fuel flow rate is an aperture of a fuel control valve (9) for controlling a flow rate of the fuel supplied to a mixer (8); and a throttle aperture, air supply pressure and air supply temperature, or air supply pressure.

7. The engine control method according to claim 5,
wherein a controlled variable for specifying the fuel flow rate is a pressure differential of fuel pressure between upper stream side and lower stream side of a fuel control valve (9) for controlling a flow rate of the fuel supplied to a mixer (8); and a throttle aperture, air supply pressure and air supply temperature, or air supply pressure.

8. The engine control method according to claim 5,
wherein a controlled variable for specifying the fuel flow rate is a pressure differential of fuel pressure between upper stream side and lower stream side of a gas pressure regulator for controlling pressure of the fuel supplied to a mixer (8); and a throttle aperture, air supply pressure and air supply temperature, or air supply pressure.

9. The engine control method according to claim 5,
wherein a controlled variable for specifying the fuel is fuel injection quantity by an injector.

## Patentansprüche

1. Ein Motorsteuerverfahren zum Steuern eines Motors (1), der mit Kraftstoff versorgt wird, aus einem Vergasungsofen, in dem sich ein Brennwert pro Volumeneinheit des Kraftstoffs ändert, wobei das Motorsteuerverfahren die folgenden Schritte umfasst:
Erfassen eines Istwertes der Sauerstoffkonzentration im Abgas;
Erfassen eines Istwertes eines Kraftstoffdurchsatzes und eines Ist-Wertes eines Luftdurchsatzes;
Berechnen eines Istwertes eines theoretischen Luft-Kraftstoff-Verhältnisses, das sich gemäß dem Brennwert ändert, basierend auf dem Istwert der Sauerstoffkonzentration, dem Istwert des Gemischgasdurchsatzes und dem Istwert der Kraftstoffsteuerventilöffnung;
Steuern einer ersten Regelgröße, die das Luft-Kraftstoff-Verhältnis bestimmt, so dass der Istwert des Luft-Kraftstoff-Verhältnisses mit dem Istwert des theoretischen Luft-Kraftstoff-Verhältnisses übereinstimmt; wobei die erste Regelgröße eine Öffnung eines Kraftstoffsteuerventils (9) zum Steuern einer Durchsatz des einem Mischer (8) zugeführten Kraftstoffs ist;
Einstellen eines Sollwerts einer Leistung des Motors auf einen Leistungsgrenzwert;
Erfassen eines Istwerts des Ausgangs; und
Steuern einer zweiten Regelgröße, die den Luftdurchsatz oder einen Mischgasdurchsatz bestimmt, so dass der Istwert des Ausgangs mit dem Sollwert des Ausgangs übereinstimmt, wobei die zweite Regelgröße eine Öffnung einer Drosselklappe (7) ist; oder die zweite Regelgröße Luftzufuhrdruck ist;
wobei der Ausgangsgrenzwert eine Größe der Leistung ist, die erfasst wird, wenn das Luft-Kraftstoff-Verhältnis auf dem theoretischen Luft-Kraftstoff-Verhältnis gehalten wird, und die zweite Regelgröße auf einem vorbestimmten zweiten Grenzwert gehalten wird.

2. Das Motorsteuerverfahren nach Anspruch 1,
wobei in dem Schritt zum Einstellen des Sollwerts des Ausgangs, der dem Istwert des Ausgangs und dem Istwert der zweiten Regelgröße entsprechende Ausgangsgrenzwert basierend auf der Korrelation zwischen dem Ausgang, der zweiten Regelgröße und dem Ausgangsgrenzwert angegeben wird und der Sollwert des Ausgangs auf den Ausgangsgrenzwert eingestellt wird.

3. Das Motorsteuerverfahren nach Anspruch 1,
wobei in dem Schritt zum Einstellen des Sollwerts des Ausgangs, der Sollwert des Ausgangs auf den Ausgangsgrenzwert eingestellt wird, durch Ändern oder Halten des Sollwerts des Ausgangs, so dass der Istwert der zweiten Regelgröße auf dem zweiten Grenzwert gehalten wird.

4. Das Motorsteuerverfahren nach einem der Ansprüche 1-3, wobei das Motorsteuerverfahren ferner die folgenden Schritte umfasst:
Einstellen eines oberen Ausgangsgrenzwertes; und
Übereinstimmen des Sollwerts des Ausgangs mit dem oberen Ausgangsgrenzwert, wenn der Sollwert des Ausgangs höher als der obere Ausgangsgrenzwert ist.

5. Das Motorsteuerverfahren nach einem der Ansprüche 1-4, wobei das Motorsteuerverfahren ferner die folgenden Schritte umfasst:
Einstellen eines Kraftstoffdurchsatzgrenzwertes; und
Übereinstimmen des Istwertes des Kraftstoffdurchsatzes mit dem Kraftstoffdurchsatzgrenzwert durch Verringern des Sollwertes der Leistung, wenn der Istwert des Kraftstoffdurchsatzes
ist größer als der Kraftstoffdurchsatzgrenzwert.

6. Das Motorsteuerverfahren nach Anspruch 5,
wobei eine Regelgröße zum Spezifizieren des Kraftstoffdurchsatzes eine Öffnung eines Kraftstoffsteuerventils (9) zum Steuern eines Durchflusses des einem Mischer (8) zugeführten Kraftstoffs ist; und eine Drosselöffnung, ein Luftzufuhrdruck und eine Luftzufuhrtemperatur oder ein Luftzufuhrdruck.

7. Das Motorsteuerverfahren nach Anspruch 5,
wobei eine Regelgröße zum Bestimmen des Kraftstoffdurchsatzes eine Druckdifferenz des Kraftstoffdrucks zwischen der oberen Stromseite und der unteren Stromseite eines Kraftstoffsteuerventils (9) zum Steuern eines Durchsatzes des einem Mischer (8) zugeführten Kraftstoffs ist; und eine Drosselöffnung, ein Luftversorgungsdruck und eine Luftversorgungstemperatur oder ein Luftversorgungsdruck.

8. Das Motorsteuerverfahren nach Anspruch 5,
wobei eine Regelgröße zum Bestimmen des Kraftstoffdurchsatz eine Druckdifferenz des Kraftstoffdrucks zwischen der oberen Stromseite und der unteren Stromseite eines Gasdruckreglers zum Steuern des Drucks des einem Mischer (8) zugeführten Kraftstoffs ist; und eine Drosselöffnung, ein Luftversorgungsdruck und eine Luftversorgungstemperatur oder ein Luftversorgungsdruck.

9. Das Motorsteuerverfahren nach Anspruch 5,
wobei eine Regelgröße zum Bestimmen des Kraftstoffs die Kraftstoffeinspritzmenge durch ein Einspritzventil ist.

## Revendications

1. Procédé de commande de moteur pour commander un moteur (1) qui est alimenté avec un carburant d'un four de gazéification où un pouvoir calorifique par volume unitaire de carburant change, le procédé de commande de moteur comprenant les étapes de :
détection d'une valeur réelle de concentration en oxygène dans les gaz d'échappement ;
détection d'une valeur réelle d'un débit de carburant et d'une valeur réelle d'un débit d'air ;
calcul d'une valeur réelle d'un rapport air-carburant théorique changeant selon le pouvoir calorifique, sur la base de la valeur réelle de la concentration en oxygène, la valeur réelle du débit de gaz de mélange, et la valeur réelle de l'ouverture de vanne de contrôle de carburant ;
contrôle d'une première variable contrôlée déterminant le rapport air-carburant de sorte que la valeur réelle du rapport air-carburant coïncide avec la valeur réelle du rapport air-carburant théorique ; dans lequel la première variable contrôlée est une ouverture d'une vanne de contrôle de carburant (9) pour contrôler un débit du carburant introduit dans un mélangeur (8) ;
fixation d'une valeur cible d'une puissance du moteur à une valeur limite de puissance ;
détection d'une valeur réelle de la puissance ; et
contrôle d'une seconde variable contrôlée déterminant le débit d'air ou un débit de gaz de mélange de sorte que la valeur réelle de la puissance coïncide avec la valeur cible de la puissance, dans lequel la seconde variable contrôlée est une ouverture d'une vanne d'étranglement (7) ; ou la seconde variable contrôlée est une pression d'alimentation en air ;
dans lequel la valeur limite de puissance est une dimension de la puissance acquise lorsque le rapport air-carburant est maintenu au rapport air-carburant théorique et la seconde variable contrôlée est maintenue à une seconde valeur limite prédéterminée.

2. Procédé de commande de moteur selon la revendication 1,
dans lequel, dans l'étape de fixation de la valeur cible de la puissance, la valeur limite de puissance correspondant à la valeur réelle de la puissance et la valeur réelle de la seconde variable contrôlée est spécifiée, sur la base d'une corrélation parmi la puissance, la seconde variable contrôlée, et la valeur limite de puissance, et la valeur cible de la puissance est fixée à la valeur limite de puissance.

3. Procédé de commande de moteur selon la revendication 1,
dans lequel, dans l'étape de fixation de la valeur cible de la puissance, la valeur cible de la puissance est fixée à la valeur limite de puissance, en modifiant ou maintenant la valeur cible de la puissance de sorte que la valeur réelle de la seconde variable contrôlée est maintenue à la seconde valeur limite.

4. Procédé de commande de moteur selon l'une quelconque des revendications 1-3, le procédé de commande de moteur comprenant de plus les étapes de :
fixation d'une valeur limite supérieure de puissance ; et
coïncidence de la valeur cible de la puissance avec la valeur limite supérieure de puissance lorsque la valeur cible de la puissance est supérieure à la valeur limite supérieure de puissance.

5. Procédé de commande de moteur selon l'une quelconque des revendications 1-4, le procédé de commande de moteur comprenant de plus les étapes de :
fixation d'une valeur limite de débit de carburant ; et
coïncidence de la valeur réelle du débit de carburant avec la valeur limite de débit de carburant en abaissant la valeur cible de la puissance, lorsque la valeur réelle du débit de carburant est supérieure à la valeur limite de débit de carburant.

6. Procédé de commande de moteur selon la revendication 5,
dans lequel une variable contrôlée pour spécifier le débit de carburant est une ouverture d'une vanne de contrôle de carburant (9) pour contrôler un débit du carburant fourni à un mélangeur (8) ; et une ouverture d'étranglement, pression d'alimentation en air et température d'alimentation en air, ou pression d'alimentation en air.

7. Procédé de commande de moteur selon la revendication 5,
dans lequel une variable contrôlée pour spécifier le débit de carburant est un différentiel de pression de pression de carburant entre un côté d'écoulement supérieur et un côté d'écoulement inférieur d'une vanne de contrôle de carburant (9) pour contrôler un débit du carburant introduit dans un mélangeur (8) ; et une ouverture d'étranglement, pression d'alimentation en air et température d'alimentation en air, ou pression d'alimentation en air.

8. Procédé de commande de moteur selon la revendication 5,
dans lequel une variable contrôlée pour spécifier le débit de carburant est un différentiel de pression de pression de carburant entre un côté d'écoulement supérieur et un côté d'écoulement inférieur d'un régulateur de pression de gaz pour contrôler une pression du carburant introduit dans un mélangeur (8) ; et une ouverture d'étranglement, pression d'alimentation en air et température d'alimentation en air, ou pression d'alimentation en air.

9. Procédé de commande de moteur selon la revendication 5,
dans lequel une variable contrôlée pour spécifier le carburant est une quantité d'injection de carburant par un injecteur.
